# EUROPÄISCHE PATENTSCHRIFT

(11) **EP 2 292 852 B1**
(45) Veröffentlichungstag und Bekanntmachung des Hinweises auf die Patenterteilung: **13.07.2016**
(21) Anmeldenummer: 10008903.6
(22) Anmeldetag: 27.08.2010
(51) Int. Cl.: E03C 1/042, F16L 15/04, F16J 15/06

(54) **Sanitärarmatur und Dichtring für eine Sanitärarmatur**
Sanitary fitting and seal for same
Armature sanitaire et anneau d'étanchéité pour une armature sanitaire

(30) Priorität: 02.09.2009 DE 102009039671
(43) Veröffentlichungstag der Anmeldung: 09.03.2011
(73) Patentinhaber: Schell GmbH & Co. KG, 57462 Olpe (DE)
(72) Erfinder: Ludwig, Maico, 57462 Olpe (DE); Mette, Michael, 57462 Olpe (DE); Plum, Matthias, 58119 Hagen (DE); Wurm, Guido, 57489 Drolshagen (DE)
(74) Vertreter: Patentanwälte Dörner & Kötter PartG mbB

(56) Entgegenhaltungen:
- EP-A1- 0 647 810
- EP-A1- 1 004 804
- CA-A1- 2 363 881
- DE-A1- 2 260 728

## Beschreibung

Die Erfindung betrifft eine Sanitärarmatur mit einem Anschlussgewinde, das eine Aufnahmenut aufweist, die in ihrem Nutgrund mit einer Rändelung versehen ist und der Nutgrund zur Längsmittellinie des Anschlussgewindes parallel ausgerichtet ist und durch zwei Flanken begrenzt ist, die orthogonal zur Längsmittellinie ausgerichtet sind, wobei in der Aufnahmenut ein Dichtring angeordnet ist.

Sanitärarmaturen hier betrachteten Art mit Dichtring sind bekannt (vgl. bspw. DE 2 260 728 A1). Es handelt sich dabei um Eckventile, Druckspüler und dergleichen. Diese sind mit einem Anschlussgewinde versehen, welches mit einem Dichtring zur Abdichtung gegen das jeweilige Wandanschlussfitting versehen ist. Beim Einschrauben der Armaturen wird der Dichtring plastisch umgeformt und gegen die Flanken des Fittinggewindes gepresst. Aufgrund der Pressung erfolgt die Abdichtung zwischen Armatur und Fitting. Bei dem Fitting kann es sich um einen Wandanschlusswinkel oder auch eine sogenannte Hahnverlängerung handeln.

Die bei den Sanitärarmaturen verwendeten Dichtringe haben in der Regel einen rechteckigen Querschnitt, wobei die nach außen gerichteten Flanken des Dichtrings mit Schrägen oder Radien versehen sind. Bei der werksseitigen Montage der Dichtringe auf den Anschlussgewinden der Armaturen wird der Dichtring innerhalb seiner Elastizitätsgrenze geweitet und im Anschlussgewinde der Armatur angeordnet. Hierzu weist das Gewinde eine Nut auf, die in ihrem Nutgrund mit einer Rändelung versehen ist. Die Rändelung dient der Verhinderung eines Verdrehens des Dichtrings beim Einschrauben der Armatur. Es besteht auch die Möglichkeit, den Dichtring im Kunststoffspritzverfahren direkt in die Gewindenut einzuspritzen.

Aus der EP 0647 810 ist darüber hinaus ein Schraubteil mit Dichtung zur Herstellung einer dichten Gewindeverbindung bekannt, bei dem der Bereich des freien Endes des Gewindes einen größeren Querschnitt oder Durchmesser aufweist als der beim Einschrauben nachfolgende Bereich. Die Dichtung kann auf dem Gewinde oder auf einem Konus angeordnet sein.

Wandanschlussfitting sowie Sanitärarmatur sind üblicherweise mit einem zylindrischen Gewinde nach ISO 228-1 (G-Gewinde) versehen. Die verwendeten Dichtringe sind derart dimensioniert, dass bei der Kombination der Gewinde einerseits das erforderliche Einschraubmoment ein vollständiges Einschrauben der Dichtringe zulässt, andererseits ein Herausschrauben der Armatur ohne Werkzeugverwendung verhindert ist. Es sind außerdem Wandanschlussfittinge, insbesondere Hahnverlängerungen, bekannt, die ein zylindrisches Gewinde nach DIN EN 10226 (R/RP-Gewinde) aufweisen. Diese Gewinde weisen eine andere Toleranzlage auf, wodurch das Spiel bei der Kombination einer Armatur mit einem G-Gewinde und einem Fitting mit einem R/RP-Gewinde reduziert ist. Dies führt zu einer stärkeren Verformung des Dichtrings beim Einschrauben. Daraus resultieren hohe Umformkräfte im Dichtring, die zu einer Schädigung des Armaturengewindes führen können. Zudem kann sich aufgrund des erhöhten Umformdruckes beziehungsweise eines daraus resultierenden vorgeschädigten Armaturengewindes eine Erhöhung des Armaturen-Einschraubmomentes einstellen. Im äußersten Fall kann sich das Einschraubmoment derart erhöhen, dass ein vollständiges Einschrauben des Dichtrings verhindert ist.

Hier will die Erfindung Abhilfe schaffen. Der Erfindung liegt die Aufgabe zugrunde, eine Sanitärarmatur zu schaffen, die trotz des erhöhten Umformungsgrades der Dichtringe bei einer Kombination einer Armatur mit einem G-Gewinde und einem Fitting mit einem R/RP-Gewinde ein vollständiges Einschrauben des Dichtrings in das Wandanschlussfitting bei unverändertem Einschraubmoment ermöglichen und gleichzeitig ein Herausschrauben der Armatur ohne Werkzeugverwendung ausgeschlossen ist. Gemäß der Erfindung wird diese Aufgabe durch die Merkmalen von Anspruch 1 gelöst.

Mit der Erfindung ist eine Sanitärarmatur geschaffen, die auch bei einer Kombination einer Armatur mit einem G-Gewinde und einem Fitting mit einem R/RP-Gewinde ein vollständiges Einschrauben des Dichtrings in das Wandanschlussfitting bei gleichbleibendem Einschraubmoment ermöglicht. Zudem ist ein Herausschrauben der Armatur ohne Werkzeug verhindert. Auch eine Vorschädigung des Anschlussgewindes ist aufgrund des gekürzten Gewindegangs verhindert, da durch den gekürzten Gewindegang ausreichend Deformationsraum für den Dichtring besteht. Zudem ist aufgrund des auf dem Sockel des Dichtrings angeordneten Stegs die Möglichkeit geschaffen, eine bereichsweise Deformation des Dichtrings zu ermöglichen. Während der Sockel beim Einschrauben der Armatur in das Fitting starr in der Nut der jeweiligen Sanitärarmatur angeordnet ist, vermag der Steg eine Deformation vorzunehmen, die eine Abdichtung ermöglicht.

In Weiterbildung der Erfindung ist der Gewindegang etwa auf die halbe Höhe gekürzt. Diese Ausbildung hat sich als besonders vorteilhaft herausgestellt, da einerseits ein ausreichender Deformationsraum für den Dichtring bereit gestellt wird, andererseits eine ausreichende Führung für das Gewinde vorhanden ist, so dass der Einschraubvorgang selbst nicht behindert ist.

In Ausgestaltung der Erfindung ist der Steg asymmetrisch auf dem Sockel angeordnet. Mit Hilfe dieser Ausbildung kann auf besondere Gegebenheit unterschiedlicher Gewindekombinationen Rücksicht genommen werden. Zudem besteht die Möglichkeit, durch eine insbesondere dem freien Ende des Anschlussgewindes der Sanitärarmatur zugewandten Anordnung des Steges einen vergrößerten Deformationsraum beim Einschrauben bereitzustellen.

Andere Weiterbildungen und Ausgestaltungen der Erfindung sind in den übrigen Unteransprüchen angegeben. Ein Ausführungsbeispiel der Erfindung ist in der Zeichnung dargestellt und wird nachfolgend im Einzelnen beschrieben. Es zeigen:
- Fig. 1: die Darstellung einer Sanitärarmatur in Form eines Eckventils mit bzw. ohne in die Nut eingesetzten Dichtring;
- Fig. 2: den Schnitt durch einen Dichtring in vergrößerter Darstellung;
- Fig. 3: die Einzelheit A aus Figur 1.

Die als Ausführungsbeispiel gewählte Armatur 10 ist mit einem Armaturengriff 20 versehen. Rechtwinkelig zum Armaturengriff 20 ist am freien Ende der Armatur 10 eine Verschraubung 30 zum Rohr- beziehungsweise Schlauchanschluss vorgesehen. Zur Abdichtung gegen ein - nicht dargestelltes - Fitting ist die Armatur 10 mit einem Dichtring 40 versehen.

Bei der Sanitärarmatur 10 handelt es sich im Ausführungsbeispiel um ein Eckventil. Es ist mit einem Armaturenkörper 11 versehen, an dem ein Abgangsstutzen 12 und ein rechtwinkelig dazu ausgerichteter Anschlussstutzen 13 vorgesehen sind. Der Anschlussstutzen 13 ist mit einem Anschlussgewinde 14 versehen, das eine Aufnahmenut 15 aufweist. Die Aufnahmenut 15 ist in ihrem Nutgrund mit einer Rändelung 16 versehen.

Der Armaturengriff 20, mit dem ein Öffnen beziehungsweise Absperren des Eckventils möglich ist, ist auf der dem Anschlussgewinde 14 abgewandten Seite des Eckventils angeordnet. Die Verschraubung 30 ist am freien Ende des Abgangsstutzens 12 vorgesehen und dient zum Anschluss mit einem Rohr beziehungsweise einem Schlauch.

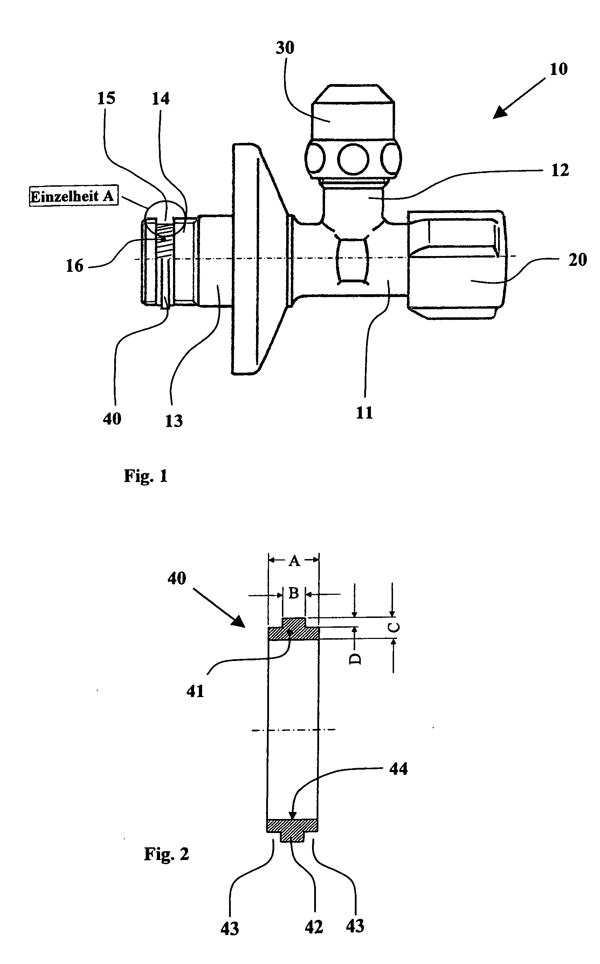

In die Aufnahmenut 15 des Eckventils 10 ist der Dichtring 40 einsetzbar. Der Dichtring 40 weist einen Sockel 41 auf, auf dem ein Steg 42 angeordnet ist. Der Steg 42 ist von beidseitig angeordneten Stufen 43 gebildet. Der Steg 42 steht daher über den Umfang des Sockels 41 hervor. Wie der Darstellung der unteren Hälfte in Figur 1 zu entnehmen ist, ragt der Steg 42 über das Anschlussgewinde 14 radial hervor, während der Sockel 41 im Wesentlichen bündig mit dem Anschlussgewinde 14 abschließt.

In moniertem Zustand liegt der Dichtring 40 mit seiner Ringinnenseite 44 im Nutgrund der Aufnahmenut 15 auf. Er steht damit in Berührung mit der Rändelung 16, die beim Einschrauben der Armatur in das jeweilige Wandanschlussfitting ein Verdrehen des Dichtring 40 verhindert. Der Innendurchmesser des Dichtring 40 ist bekanntermaßen etwas kleiner als der Außendurchmesser des Grundes der Aufnahmenut 15, so dass der Dichtring mit einer Vorspannung auf der Rändelung 16 angeordnet ist.

Der als Ausführungsbeispiel gewählte Dichtring 40 weist hinsichtlich seiner Breite A zur Breite B des Stegs (42) ein Verhältnis von 2,3:1 auf. Ebenso weist die Breite A des Dichtrings 40 zur Höhe C des Dichtrings 40 ein Verhältnis von 2,3:1 auf. Das gleiche Verhältnis von 2,3:1 besteht hinsichtlich der Höhe C des Dichtrings 40 und der Höhe D der Stufen 43.

Der Dichtring 40 ist aus den üblicherweise aus dem Stand der Technik bekannten Materialien für Dichtringe hergestellt. Im Ausführungsbeispiel besteht der Dichtring 40 aus Kunststoff. Er kann auch aus Elastomer bestehen.

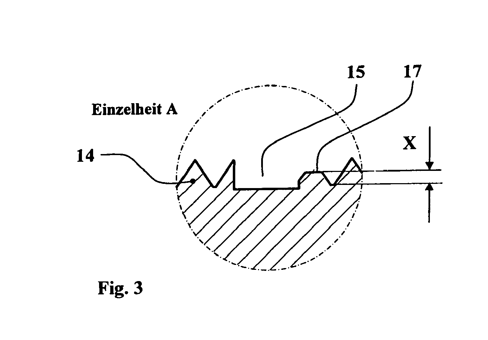

Bei dem Anschlussgewinde 14 handelt es sich um ein zylindrisches Gewinde nach ISO 228-1 (G-Gewinde). In dem Anschlussgewinde 14 ist der der Aufnahmenut 15 auf der dem freien Ende des Anschlussgewindes 14 abgewandten Seite benachbarter Gewindegang 17 gekürzt ausgebildet. Figur 3 ist zu entnehmen, dass der Gewindegang 17 anstelle der üblicherweise spitzen Ausbildung eine axial ausgerichtete ebene Fläche aufweist. Durch die Kürzung des Gewindegangs 17 weist dieser lediglich eine Höhe X auf, die im Ausführungsbeispiel etwa halb so hoch ist, wie die übrigen Gewindegänge; der Gewindegang 17 ist folglich auf die halbe Höhe gekürzt.

Die erfindungsgemäß ausgebildete Sanitärarmatur 10 bietet die Möglichkeit einer Deformation des Dichtringes 40 auch bei einer Kombination einer Armatur mit einem G-Gewinde und einem Fitting mit einem R/RP-Gewinde obwohl diese eine andere Toleranzlage aufweisen, als dies bei reinen G-Gewindekombinationen der Fall ist. Dies ist dadurch bewerkstelligt, dass aufgrund des gekürzten Gewindegangs 17 ein Deformationsraum für den Dichtring 40 geschaffen ist. Bei einem Einschrauben der Armatur 10 deformiert sich der Dichtring 40 in Richtung des Anschlussstützens 12, also in Richtung des der Aufnahmenut 15 benachbarten Gewindegangs 17. Aufgrund der gekürzten Ausführung des Gewindegangs 17 ist ein Rückzugsraum für das deformierte Material des Dichtrings 40 geschaffen, wodurch die Einschraubbewegung nicht behindert ist.

Durch die erfindungsgemäße Ausgestaltung des Dichtrings 40 sind zudem wesentlich verbesserte Deformationseigenschaften für den Dichtring geschaffen, da der Steg 42 eine geringere Breite als der Sockel 41 aufweist. Somit ist der Steg 42 geeignet, beim Einschrauben der Armatur in ein Wandanschlussfitting sich entsprechend der Schraubbewegung in Richtung des Gewindegangs 17 zu bewegen. Trotz dieser Deformation und der veränderten Toleranzlage der Kombination von armaturenseitigen G-Gewinden Gewinde mit anschlussseitigen R/RP-Gewinden nach DIN EN 10226 besteht nicht die Gefahr, dass entweder der Dichtring 40 oder das Gewinde 14 Schaden nimmt. Folglich ist eine einwandfreie Betriebssicherheit hervorgerufen. Gleichzeitig sind die Einschraubmomente im üblichen Rahmen. Durch eine asymmetrische Anordnung des Steges 42 auf den Sockel 41 können diese Eigenschaften zusätzlich verbessert sein, in dem insbesondere der Steg 42 auf der dem Gewindegang 17 abgewandten Seite des Sockels 41 angeordnet ist. Hierdurch ist eine weitere Vergrößerung des Deformationsraums beim Einschrauben der Armatur in das Fitting geschaffen.

## Patentansprüche

1. Sanitärarmatur mit einem Anschlussgewinde (14), das eine Aufnahmenut (15) aufweist, die in ihrem Nutgrund mit einer Rändelung versehen ist und wobei der Nutgrund zur Längsmittellinie des Anschlussgewindes parallel ausgerichtet ist und durch zwei Flanken begrenzt ist, die orthogonal zur Längsmittellinie ausgerichtet sind, wobei in der Aufnahmenut (15) ein Dichtring (40) angeordnet ist, **dadurch gekennzeichnet, dass** der der Aufnahmenut (15) benachbarte Gewindegang (17) des Anschlussgewindes (14) auf der dem freien Ende des Anschlussgewindes (14) abgewandten Seite in seiner Höhe im Verhältnis zu den übrigen Gewindegängen gekürzt ist, und dass der Dichtring (40) einen Sockel (41) aufweist, auf dem ein Steg (42) angeordnet ist, welcher von beidseitig angeordneten Stufen (43) gebildet ist.

2. Sanitärarmatur nach Anspruch 1, **dadurch gekennzeichnet, dass** der Gewindegang (17) etwa auf die halbe Höhe gekürzt ist.

3. Sanitärarmatur nach Anspruch 1 oder 2, **dadurch gekennzeichnet, dass** der Steg (42) asymmetrisch auf dem Sockel (41) des Dichtrings (40) angeordnet ist.

4. Sanitärarmatur nach einem oder mehreren der vorgenannten Ansprüche, **dadurch gekennzeichnet, dass** die Breite (A) des Dichtrings (40) zur Breite (B) des Stegs (42) ein Verhältnis von 2,3 zu 1 aufweist.

5. Sanitärarmatur nach einem oder mehreren der vorgenannten Ansprüche, **dadurch gekennzeichnet, dass** die Höhe (C) des Dichtrings (40) zur Höhe (D) der Stufen (43) ein Verhältnis von 2,3 zu 1 aufweist.

6. Sanitärarmatur nach einem oder mehreren der vorgenannten Ansprüche, **dadurch gekennzeichnet, dass** die Breite (A) des Dichtrings (40) zur Höhe (C) des Dichtrings (40) ein Verhältnis von 2,3 zu 1 aufweist.

7. Sanitärarmatur nach einem oder mehreren der vorgenannten Ansprüche, **dadurch gekennzeichnet, dass** der Dichtring (40) aus Kunststoff besteht.

8. Sanitärarmatur nach einem oder mehreren der vorgenannten Ansprüche, **dadurch gekennzeichnet, dass** der Dichtring (40) aus Elastomer besteht.

## Claims

1. Sanitary fitting having a connecting thread (14), which has a receiving groove (15), which is provided with a knurling in its groove base and wherein the groove base is aligned parallel to the longitudinal centre line of the connecting thread and is delimited by two flanks, which are oriented orthogonally to the longitudinal centre line, wherein in the receiving groove (15) a seal (40) is arranged, **characterised in that** the thread (17) of the connecting thread (14) adjacent to the receiving groove (15) on the side facing away from the free end of the connecting thread (14) is reduced in height in relation to the other threads and that the seal (40) has a base (41), on which a web (42) is arranged, which is formed by steps (43) arranged on both sides.

2. Sanitary fitting according to claim 1, **characterised in that** the thread (17) is reduced to approximately half its height.

3. Sanitary fitting according to claim 1 or 2, **characterised in that** the web (42) is arranged asymmetrically on the base (41) of the seal (40).

4. Sanitary fitting according to one or more of the previous claims, **characterised in that** the ratio of the width (A) of the seal (40) to the width (B) of the web (42) is 2.3 to 1.

5. Sanitary fitting according to one or more of the previous claims, **characterised in that** the ratio of the height (C) of the seal (40) to the height (D) of the steps (43) is 2.3 to 1.

6. Sanitary fitting according to one or more of the previous claims, **characterised in that** the ratio of the width (A) of the seal (40) to the height (C) of the seal (40) is 2.3 to 1.

7. Sanitary fitting according to one or more of the previous claims, **characterised in that** the seal (40) consists of plastic.

8. Sanitary fitting according to one or more of the previous claims, **characterised in that** the seal (40) consists of elastomer.

## Revendications

1. Armature sanitaire comprenant un filetage de raccordement (14) qui présente lui-même une gorge réceptacle (15) dont le fond est moleté, et sachant que le fond de la gorge est orienté parallèle à la ligne médiane longitudinale du filetage de raccordement et délimité par deux flancs perpendiculaires à la ligne médiane longitudinale, sachant que dans la rainure réceptacle (15) est agencé un anneau d'étanchéité (40), **caractérisée en ce que** le pas de vis (17) - voisin de la rainure réceptacle (15) - du filetage de raccordement (14) est raccourci en hauteur, sur le côté ne regardant pas l'extrémité libre du filetage de raccordement (14), proportionnellement aux pas de vis restants, et **en ce que** l'anneau d'étanchéité (40) présente une embase (41) sur laquelle est agencée une nervure (42) formée par des gradins (43) agencés des deux côtés.

2. Armature sanitaire selon la revendication 1, **caractérisée en ce que** le pas de vis (17) est raccourci environ à mi-hauteur.

3. Armature sanitaire selon la revendication 1 ou 2, **caractérisée en ce que** la nervure (42) est agencée asymétrique sur l'embase (41) de l'anneau d'étanchéité (40).

4. Armature sanitaire selon l'une ou plusieurs des revendications précédentes, **caractérisée en ce que** la largeur (A) de l'anneau d'étanchéité (40) présente une proportion de 2,3 : 1 par rapport à la largeur (B) de la nervure (42).

5. Armature sanitaire selon l'une ou plusieurs des revendications précédentes, **caractérisée en ce que** la hauteur (C) de l'anneau d'étanchéité (40) présente une proportion de 2,3 : 1 par rapport à la hauteur (D) des gradins (43).

6. Armature sanitaire selon l'une ou plusieurs des revendications précédentes, **caractérisée en ce que** la largeur (A) de l'anneau d'étanchéité (40) présente une proportion de 2,3 : 1 par rapport à la hauteur (C) de l'anneau d'étanchéité (40).

7. Armature sanitaire selon l'une ou plusieurs des revendications précédentes, **caractérisée en ce que** l'anneau d'étanchéité (40) est en matière plastique.

8. Armature sanitaire selon l'une ou plusieurs des revendications précédentes, **caractérisée en ce que** l'anneau d'étanchéité (40) est en élastomère.
